# EUROPÄISCHE PATENTSCHRIFT

(11) **EP 1 463 659 B1**
(45) Veröffentlichungstag und Bekanntmachung des Hinweises auf die Patenterteilung: **31.08.2005**
(21) Anmeldenummer: 03702177.1
(22) Anmeldetag: 10.01.2003
(51) Int. Cl.: B62B 3/02

(54) **HANDWAGEN**
HAND TROLLEY
CHARIOT

(30) Priorität: 11.01.2002 AT 200200045
(43) Veröffentlichungstag der Anmeldung: 06.10.2004
(73) Patentinhaber: Tobler, Johann, 2651 Reichenau (AT); Wukovnig, Siegfried, 2624 St. Egyden (AT)
(72) Erfinder: Tobler, Johann, 2651 Reichenau (AT); Wukovnig, Siegfried, 2624 St. Egyden (AT)
(74) Vertreter: Sonn & Partner Patentanwälte
(86) Internationale Anmeldenummer: PCT/AT2003/000009
(87) Internationale Veröffentlichungsnummer: WO 2003/057542

(56) Entgegenhaltungen:
- CA-A- 2 289 844
- DE-U- 29 720 558
- GB-A- 2 234 472
- US-A- 1 499 108
- US-A- 2 917 094
- US-A- 3 994 505
- PATENT ABSTRACTS OF JAPAN vol. 1996, no. 10, 31. Oktober 1996 (1996-10-31) & JP 08 150937 A (SECOM CO LTD), 11. Juni 1996 (1996-06-11)

## Beschreibung

Die Erfindung betrifft einen zusammenlegbaren Handwagen, der einen an seiner Unterseite mit mindestens einem Rad versehenen Grundrahmen und einen an dessen hinterem Ende mit diesem um eine horizontale Querachse gelenkig verbundenen Bedienungsrahmen aufweist, der zwischen einer aufrechten Schiebestellung, in der auf dem Grundrahmen zumindest ein Behälter aufsetzbar ist, und einer zum Grundrahmen im Wesentlichen parallelen Klappstellung verschwenkbar ist, wobei der Bedienungsrahmen in der Schiebestellung fixierbar ist und in der Klappstellung auf dem Grundrahmen aufliegt. GB-A-2 234 472 zeigt einen zusammenlegbaren Handwagen gemäß Oberbegriff von Anspruch 1.

Zusammenklappbare, und somit auf einfache Weise in einem PKW-Kofferraum transportierbare Handwagen, sind auf den Gebrauch im Geschäftsbereich beschränkt und können nicht außerhalb des Geschäftsbereichs unbeaufsichtigt stehen gelassen werden, da die bereits bezahlte. Ware einfach aus dem Handwagen entnommen werden kann und zudem der Handwagen auf einfache Weise verschoben werden kann.

Aus der FR 2 605 278 A ist ein zusammenklappbarer Handwagen zum Aufnehmen und Transportieren von Gütern bekannt, bei dem auf einem Sockel mit aufsteckbaren Rahmenteilen zwei übereinander stapelbare, ineinander greifende Behälter aufsetzbar sind. Die Behälter können jedoch weder versperrt werden, noch auf dem Handwagen fixiert werden.

Andererseits ist aus der US 3 994 505 A ein Einkaufswagen bekannt, der einen auf Rollen aufgebrachten Korb mit einem aufklappbaren Deckel aufweist, wobei sowohl der Deckel als auch die Rollen eine Sperrvorrichtung aufweisen. Die Sperrvorrichtung der Rollen wirkt sperrend, wenn der Deckel aufgeklappt ist, und ist geöffnet wenn der Deckel geschlossen ist, allerdings kann die Versperrvorrichtung der Räder auch manuell ausgelöst werden, wenn der Deckel aufgrund einer Überladung des Einkaufswagens geöffnet bleibt. Dieser Einkaufswagen kann jedoch nicht zusammengeklappt und somit in einem PKW-Kofferraum transportiert werden.

Es ist nun Aufgabe der Erfindung einen zusammenklappbaren und somit einfach zu transportierenden Handwagen der eingangs angeführten Art zu schaffen, der unbeaufsichtigt stehen gelassen werden kann, da die Entnahme des Behälters vom Handwagen bzw. die Entnahme von Waren aus dem Behälter nicht möglich ist. Zudem soll ein Verschieben des unbeaufsichtigten Handwagens nur erschwert möglich sein.

Diese Aufgabe wird erfindungsgemäß durch einen Handwagen der eingangs angeführten Art gelöst, bei dem am Bedienungsrahmen um eine horizontale Querachse ein zumindest zwischen einer Schiebestellung und einer Parkstellung schwenkbar gelagerter Lenkbügel vorgesehen ist, wobei in der Parkstellung über ein mit dem Lenkbügel verbundenes Bremsgestänge zumindest ein Rad blockiert ist, und bei dem der mindestens eine bzw. oberste Behälter sowie ein am obersten Behälter angeordneter Deckel mittels einer formschlüssigen Verbindung zwischen Deckel und Lenkbügel, gegebenfalls unter Zwischenschaltung eines Verbindungsteils, auf dem Handwagen fest angeordnet ist. Somit können in einem oder mehreren Behältern Waren sicher verwahrt werden, wobei ein Abheben der Behälter durch die feste Anordnung der Behälter am Handwagen in der Parkstellung nicht möglich ist; zudem ist eine Entnahme der Waren aus dem geschlossenen Behälter nicht möglich. Des weiteren kann der Handwagen aufgrund der Blockade von zumindest einem Rad auch nicht bzw. nur mit erhöhtem Aufwand verschoben werden. Darüber hinaus kann der Handwagen zusammengeklappt werden, und somit auf einfache Weise, beispielsweise in einem PKW-Kofferraum, transportiert werden.

Für eine zuverlässige Blockade zumindest eines Rades und für einen auf einfache Weise herzustellenden Formschluss zwischen dem Lenkbügel und dem Deckel bzw. dem Verbindungsteil ist es von Vorteil, wenn der Lenkbügel in der Parkstellung mit dem Bedienungsrahmen, einen Winkel von 150 bis 270°, vorzugsweise von 180°, einschließt.

Um auf einfache Weise eine dosierte Bremskraft mittels Verschwenken des Lenkbügels auf ein oder mehrere Räder ausüben zu können, ist es von Vorteil, wenn das mit dem Lenkbügel verbundene Bremsgestänge jeweils mit einem hinteren Rad zusammenwirkende Bremseinrichtung aufweist. Als Bremseinrichtung können beispielsweise Bremsbacken, Bremsbolzen, Bremsschuhe oder dergl. vorgesehen sein.

Wenn der Lenkbügel im Bedienungsrahmen frei schwenkbar gelagert ist und in einer nach unten verschwenkten Stellung des Lenkbügels zumindest eine Bremseinrichtung mit einem hinteren Rad in Berührung steht, kann, ohne weitere Maßnahmen zu setzen, durch einfaches Hinunterdrücken des Lenk - bzw. Arretierbügels der Handwagen gebremst werden. Zur Betätigung der Bremseinrichtung kann jedoch selbstverständlich auch eine Arretierklappe oder dergl. vorgesehen sein.

Um den Lenkbügel sowohl in der Schiebestellung als auch in der Parkstellung arretieren zu können, ist es von Vorteil, wenn der Lenkbügel zwei Längsholme aufweist, zwischen welchen ein Drehgriff drehbar gelagert ist, der mit Kupplungsgestängen in Verbindung steht, die mit Kupplungsklauen versehen sind, die mit jeweils einer von an Längsstreben des Bedienungsrahmens angebrachten Kupplungsscheiben zusammenwirkt, die zumindest zwei Ausnehmungen aufweisen, in die die entsprechende Kupplungsklaue einrastbar ist, wobei eine Ausnehmung der Parkstellung, und eine Ausnehmung einer Schiebestellung entspricht.

Um ein Abheben der Behälter nur zu ermöglichen, wenn der Behälter zuerst an der dem Bedienungsrahmen zugewandten Seite angehoben wird, ist es von Vorteil, wenn der unterste Behälter auf dem Grundrahmen bzw. jeder obere Behälter auf dem jeweils unteren Behälter über eine an der Frontseite des Grundrahmens bzw. des jeweils unteren Behälters angebrachte Leiste sicherbar ist, die mit am oberhalb befindlichen Behälter angebrachten hakenförmigen und schräg nach unten und vorne gerichteten Keilleisten in Eingriff bringbar sind.

Wenn ein auf dem bzw. dem jeweils obersten Behälter angebrachter Deckel oder eine mit diesem Deckel verbundene als Verbindungsteil vorgesehene Verlängerung eine Lasche aufweist, die durch einen Schlitz im in Parkstellung befindlichen Lenkbügel durchführbar ist, kann ein Abheben der Behälter in der Parkstellung des Handwagens auf einfache Weise verhindert werden. Insbesondere ist es zur Sicherung des Behälters auf dem Handwagen günstig, wenn die Lasche im. Schlitz des Lenkbügels in an sich bekannter Weise mittels eines Schlosses sicherbar ist.

Um das Verschieben des Handwagens - abgesehen von der Blockierung zumindest eines Rades - in der Parkstellung weitergehend behindern zu können, bzw. zuverlässig ein Verrutschen des Handwagens auch auf abschüssigen Flächen zu vermeiden, ist es günstig, wenn an dem Grundrahmen ein Aufbockdorn vorgesehen ist.

Es können auch auf der im Betriebszustand bodenzugewandten Seite des Bedienungsrahmens ein oder mehrere Räder angebracht sein, deren Radhalterungen unterhalb des Grundrahmens vorliegen und in diesen hineinragen. Dies bringt den Vorteil mit sich, dass diese Räder beim Zusammenklappen ebenfalls um die gelenkige Verbindung geschwenkt werden, und somit eine größere Auflagefläche entsteht, auf der ein Behälter gestapelt werden kann.

Insbesondere ergibt sich eine robuste, zuverlässige Fixierung zwischen dem Bedienungs- und dem Grundrahmen, wenn die gelenkige Verbindung zwischen dem Bedienungsrahmen und dem Grundrahmen im Betriebszustand mittels einem, beweglich gelagerten Formteil, vorzugsweise einem U-Profil, fixiert ist.

Für eine einfache Überführung des Formteils von seiner Sperrstellung in eine Offenstellung und umgekehrt, ist es von Vorteil, wenn der Formteil am Bedienungsrahmen, vorzugsweise der Querstrebe, schwenkbar gelagert ist.

Auf konstruktiv einfache Weise wird die formschlüssige Verbindung zwischen Bedienungsrahmen und Grundrahmen erlangt, wenn im Betriebszustand eine Querstrebe des Bedienungsrahmens und eine Querstrebe des Grundrahmens mittels dem Formteil formschlüssig miteinander verbunden sind.

Vorteilhafterweise ist der Formteil über ein elastisches Element, vorzugsweise eine Feder, ein Gummiband oder dergl., in seiner sperrenden Position fixiert, da es dadurch auf einfache Weise möglich ist, die Klemme aus ihrer sperrenden Stellung durch Aufbringen einer Kraft, die größer als die Federkraft ist, zu lösen.

Um eine möglichst platzsparende Ausgestaltung des Handwagens in seiner Klappstellung zu erlangen, und somit auch den Transport in relativ kleinen Transporträumen, z.B. im Kofferaum von Klein-PKWs, zu ermöglichen, ist es von Vorteil, wenn der Lenkbügel in der Klappstellung zum Grundrahmen und zum Bedienungsrahmen im Wesentlichen parallele Lage verschwenkbar ist und auf den Grundrahmen aufliegt

Um den Lenkbügel auch ein seiner Klappstellung arretieren zu können, ist es günstig, wenn die Kupplungsscheiben drei Ausnehmungen aufweisen, wobei die Ausnehmungen der Parkstellung, der Schiebestellung und der Klappstellung entsprechen.

Wenn in der Klappstellung des Lenkbügels die Bremsbolzen des Bremsgestänges die hinteren Räder blockieren, kann ein ungewolltes Drehen der Räder in der Klapp- bzw. Transportstellung vermieden werden.

Wenn der Grundrahmen und der Bedienungsrahmen aus Leichtbaumaterialien, vorzugsweise Leichtmetall, Kunststoff oder dergl., bestehen, kann der Handwagen mit geringem Kraftaufwand in einem PKW-Kofferraum verstaut werden und hieraus entnommen werden.

Die Erfindung wird nachstehend anhand von in den Zeichnungsfiguren dargestellten bevorzugten Ausführungsbeispielen, auf die sie jedoch nicht beschränkt sein soll, noch weiter erläutert. Im Einzelnen zeigen in den Zeichnungsfiguren:
Fig.1 eine Seitenansicht eines Handwagens im Betriebszustand mit einer über eine Klemme fixierte gelenkige Verbindung zwischen einem Grundrahmen und einem Bedienungsrahmen;
Fig.2 eine Seitenansicht des Handwagens gemäß Fig.1 in einem halb zusammengeklappten Zustand;
Fig.3 eine Seitenansicht des Handwagens gemäß den Fig.1 und 2 im zusammengeklappten Zustand, in dem der Grundrahmen und der Bedienungsrahmen im Wesentlichen zueinander parallel und aufeinander aufliegend sind und.der Lenkbügel noch nicht zusammengeklappt ist;
Fig.4 eine Seitenansicht des Handwagens gemäß den Fig.1 bis 3, wobei auch der Lenkbügel sich im zusammengeklappten Zustand befindet und somit parallel zu dem Grund- und Bedienungsrahmen ist und auf dem Grundrahmen aufliegt;
Fig.5 eine schematische Detailansicht der gelenkigen Verbindung zwischen dem Grundrahmen und dem Bedienungsrahmen in einer Schrägrissdarstellung;
Fig.6 eine auseinandergezogene Darstellung eines im Lenkbügel angeordneten Drehbügels mit einem damit verbundenen Kupplungsgestänge;
Fig. 6a eine auseinandergezogene Darstellung eines alternativen Lenkbügels mit einem verschieblich gelagerten Drücker;
Fig.7 eine auseinandergezogene Darstellung des Lenkbügels und eines damit verbundenen Bremsmechanismus;
Fig.8 eine Schrägansicht des Handwagens mit zwei übereinander gestapelten Behältern, einer ausgefahrenen Kufeneinrichtung und einem Aufbockdorn;
Fig.9 einen vertikalen Längsschnitt des Handwagens gemäß Fig.8 inklusive Detailzeichnungen der Verbindungen zwischen den Behältern bzw. zwischen dem oberen Behälter und einem Deckel;
Fig.10 eine Schrägansicht eines Handwagens mit einem aufgesetzten Behälter, einem Deckel und einer Verlängerung;
Fig.11 einen vertikalen Längsschnitt des Handwagens gemäß Fig.10 mit dem Lenkbügel in seiner Betriebsstellung und in seiner ausgestreckten sperrenden Stellung;
Fig.12 eine Detailansicht des Versperrmechanismus;
Fig.13 eine Schrägansicht der ausschwenkbaren Kufeneinrichtung mit Radschuhen;
Fig.14 eine Detailansicht des Aufbockdorns;
Fig.15 schematisch eine Frontansicht einer möglichen Anordnung beim Transport des Handwagens mit Behältern in einem PKM;
Fig.16 schematisch eine Seitenansicht gemäß Fig.15.

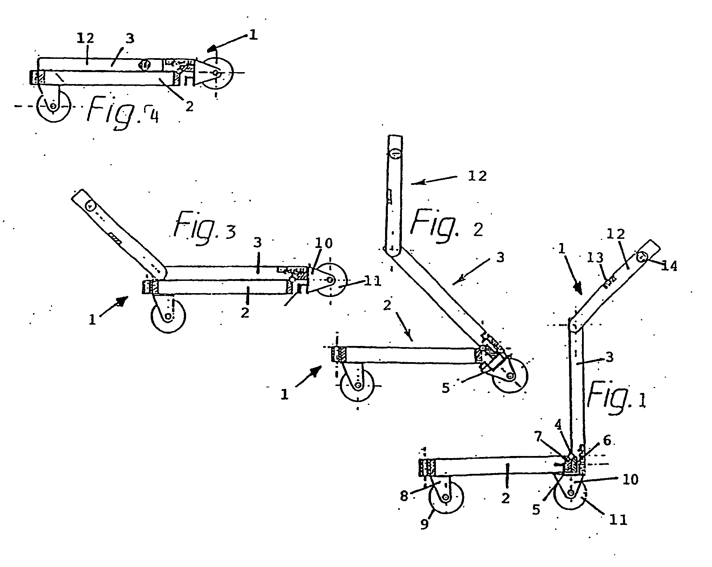

In Fig.1 ist ein Handwagen 1 mit einem Grundrahmen 2 und einem Bedienungsrahmen 3 dargestellt. Der Bedienungsrahmen 3 ist mit dem Grundrahmen 2 über eine horizontale Querachse 4 gelenkig verbunden und in seiner aufrechten Betriebsstellung mittels einer Klemme 5 fixierbar. Die Klemme 5 ist an einer Querstrebe 6 des Bedienungsrahmens 3 schwenkbar angebracht und umklammert eine Querstrebe 7 des Grundrahmens 2 und fixiert somit den Bedienungsrahmen 3 in seiner aufrechten Position. An der Unterseite des Grundrahmens 2 sind Halterungen 8 angebracht, in denen vordere Laufräder 9 drehbar gelagert sind. In dem in Fig.1 gezeigten Betriebszustand sind an der Unterseite des Bedienungsrabmens 3 Halterungen 10 angebracht, in denen hintere Laufräder 11 drehbar gelagert sind. Ein Lenkbügel 12 ist mit dem Bedienungsrahmen 3 drehbar verbunden, und in einer zusammengeklappten Stellung, einer Betriebsstellung und einer gegenüber dem Bedienungsrahmen ausgestreckten Stellung fixierbar. Der Lenkbügel 12 weist eine Querstrebe 13 und einen Drehgriff 14 auf.

In Fig.2 ist der Handwagen 1 in einer halb zusammengeklappten Stellung gezeigt. Die Fixierung zwischen dem Grundrahmen 2 und dem Bedienungsrahmen 3 über die Klemme 5 ist gelöst und somit kann der Bedienungsrahmen 3 gegenüber dem Grundrahmen 2 verschwenkt werden. Der Lenkbügel 12 befindet sich weiterhin in der Betriebsstellung, in der er gegenüber dem Bedienungsrahmen 3 fixiert ist.

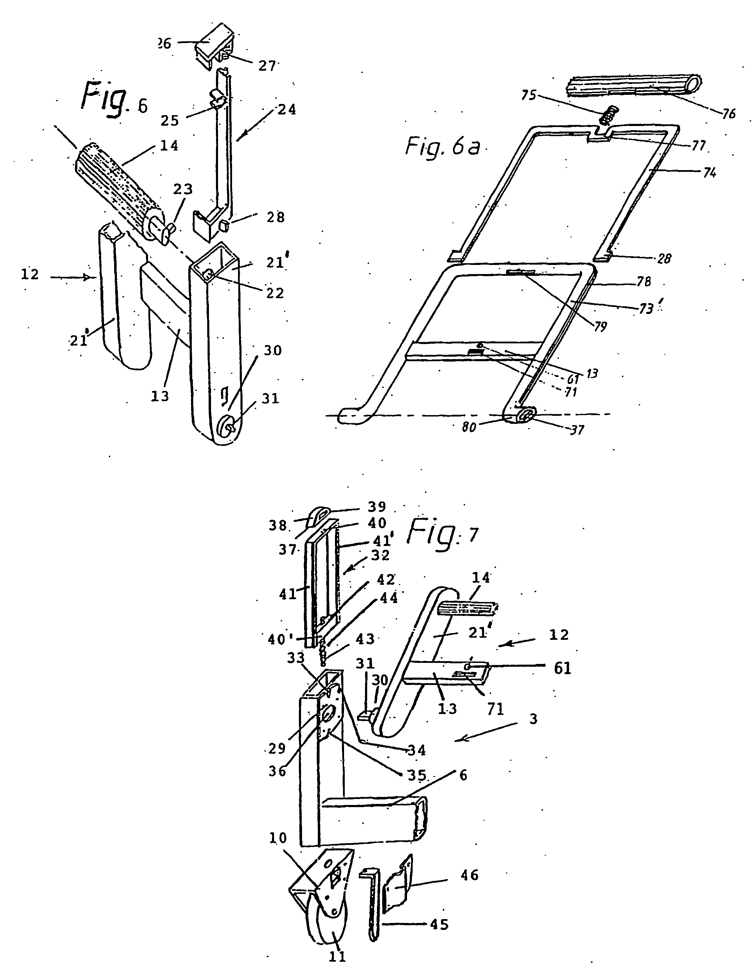

In Fig. 3 ist der Handwagen 1 in seiner zusammengeklappten Stellung gezeigt. In dieser Stellung befinden sich der Grundrahmen 2 und der Bedienungsrahmen 3 in einer im Wesentlichen zueinander parallelen Stellung und der Bedienungsrahmen 3 liegt auf dem Grundrahmen 2 auf. Bei der vorteilhaften Anbringung der Radhalterungen 10 an der Unterseite des Bedienungsrahmens 3 werden auch die hinteren Laufräder 11 verschwenkt, und somit ergibt sich eine sehr kompakte zusammengeklappte Stellung des Handwagens 1. Der Lenkbügel 12 befindet sich weiterhin in seiner Betriebsstellung, in der er gegenüber dem Bedienungsrahmen 3 in seiner Position fixiert ist.

In Fig.4 ist der Handwagen 1 in seiner vollkommen zusammengeklappten Stellung gezeigt. In dieser Stellung ist auch der Lenkbügel 12 relativ zum Bedienungsrahmen 3 verschwenkt und zum Bedienungsrahmen 3 und dem Grundrahmen 2 im Wesentlichen parallel und liegt auf dem Grundrahmen 2 auf.

In Fig.5 ist die gelenkige Verbindung zwischen dem Grundrahmen 2 und dem Bedienungsrahmen 3 in einer Schrägansicht im Detail gezeigt. Zum Fixieren des Bedienungsrahmens 3 in seiner aufrechten Stellung ist an der Querstrebe 6 des Bedienungsrahmens 3 eine Klemme 5 mittels eines Bolzens 15 verschwenkbar angebracht. Die Klemme 5 weist im Wesentlichen ein U-Profil 16, eine Trittlasche 17 und eine Gleitlasche 18 auf. Wenn auf die Trittlasche 17 keine Kraft aufgebracht wird, wird die Klemme 5 über eine Zugfeder 19 zur Querstrebe 6 gezogen. Beim Aufklappen des Handwagens 1 gleitet die Gleitlasche 18 an der Querstrebe 7 des Grundrahmens 2, bis das U-Profil 16 sowohl diese Querstrebe 7 als auch die Querstrebe 6 des Bedienungsrahmens 3 umfasst und somit die gelenkige Verbindung blockiert ist. Die Querstrebe 7 ist zur Bildung des Grundrahmens 2 mit Längsstreben 20 verschweißt. Die Querstrebe 6 ist zur Bildung des Bedienungsrahmens 3 mit Längsstreben 21 verschweißt.

In Fig.6 ist eine auseinandergezogene Darstellung des am Lenkbügel 12 drehbar gelagerten Drehgriffs 14 und des damit verbundenen Kupplungsgestänges 24 gezeigt. Der Lenkbügel 12 weist im Wesentlichen eine Querstrebe 13 und zwei Längsholme 21' auf, zwischen welchen der Drehgriff 14 in Öffnungen 22 drehbar gelagert ist. Der Drehgriff 14 steht über Drehgrifffinger 23 mit Kupplungsgestängen 24 in Verbindung, an welchen Drehgrifffingeraufnehmer 25 angebracht sind. Die hohlen Vierkantprofile der Längsholme 21' sind nach außen mittels Holmdeckeln 26 abgedeckt. Zwischen den Holmdeckeln 26 und den Kupplungsgestängen 24 sind Kupplungsfedern 27 angebracht. Am unteren Ende der Kupplungsgestänge 24 sind Kupplungsklauen 28 vorgesehen, die mit Kupplungsscheiben 29 (s.

Fig.7) in Eingriff stehen. zum Auslösen einer Bremskraft beim Verschwenken des Lenkbügels 12 sind an beiden Längsholmen 21' Wellen 30 mit Mitnehmern 31 vorgesehen.

In Fig. 6a ist ein alternativer Lenkbügel 73' gezeigt, der ein U-förmig gebogenes Rohr (Formrohr) aufweist, welches an den beiden Enden in.der Ebene des U-Rohres 73 in Form eines Stummels 80 rechtwinkelig nach außen gebogen ist. An den Enden der Stummel 80 sind Exzenter 37 angebracht, welche ein Bremsgestänge 32 betätigen (vgl. Fig. 7). Das U-Rohr 73 weist an seiner Außenseite jeweils einen bis zum Stummel 80 durchgehenden Längsschlitz 78 auf, in welchen das Kupplungsgestänge 74 aufgenommen ist. Das Kupplungsgestänge 74 ist an beiden Enden nach außen zu Kupplungsklauen 28 geformt und ist im Bereich eines Handgriffs 76 nach innen zu einem Drücker 77 gekröpft, welcher mit einer Druckfeder 75 durch die Drückeröffnung 79 des Lenkbügels 73 gedrückt wird. Bei Betätigung des Drückers 77 wird die Kupplungsscheibe 29 (s. Fig. 7) gegen den Druck der Druckfeder 75 entriegelt. Die Schenkel des U-förmigen Lenkbügels 73' sind über die.Querstrebe 13 miteinander verbunden, in der das Schloss 61 und der Schlitz 71 angebracht sind.

In Fig.7 ist eine auseinandergezogene Darstellung des Bedienungsrahmens 3, des Lenkbügels 12 und der Verbindung mit den zwischen den beiden vorgesehenen Bremsgestängen 32 gezeigt. An den Innenseiten der Längsstreben 21 des Bedienungsrahmens 3 sind Kupplungsscheiben 29 angebracht. In jeder dieser Kupplungsscheiben 29 sind eine Ausnehmung 33 zum Einrasten der Kupplungsklaue 28 in die Streckstellung, eine Ausnehmung 34 zum Einrasten der Kupplungsklaue 28 in die Schiebestellung und eine Ausnehmung 35 zum Einrasten der Kupplungsklaue 28 in die Staustellung des Lenkbügels 12 vorgesehen. Für den Durchtritt der Wellen 30 und der Mitnehmer 31 sind in den Kupplungsteilen 29 und den Längsstreben 21 Öffnungen 36 vorgesehen. Die Mitnehmer 31 greifen im Inneren der Längsstreben 21 an Exzentern 37 an. Jeder Exzenter 37 liegt je nach Verschwenkung des Lenkbügels 12 mit einer blockierenden Seite 38 oder einer Bremsseite 39 auf einer Gleitfläche 40 des Bremsgestänges 32 auf. Jedes Bremsgestänge 32 besteht im Wesentlichen aus einem rechteckigen Rahmen, der sich aus Querseiten 40 und 40' und Längsseiten 41 und 41' zusammensetzt. An einer Querseite 40' ist eine Gewindebohrung 42 zum Einschrauben eines Bremsbolzens 43 vorgesehen. Beim Verschwenken des Lenkbügels 12 in Richtung der Staustellung werden die Bremsbolzen 43 gegen die Kraft von Federn 44 auf die hinteren Räder 11 gedrückt, wobei durch das auftretende Reibmoment eine Bremswirkung erzielt wird. Beim Verschwenken des Lenkbügels 12 in die Streckstellung wirkt die durch die Bremsbolzen 43 auf die hinteren Räder 11 aufgebrachte Reibkraft sperrend und zusätzlich werden zwei Aufbockbolzen 45 ausgefahren, die den Handwagen 1 auf der Seite des Bedienungsrahmens 3 emporheben und somit unfahrbar machen. Die Aufbockbolzen 45 sind außerhalb der Radhalterungen 10 an den Innenseiten der Räder 11 angebracht und mittels Abdeckplatten 46 abgedeckt. In der Querstrebe 13 des Lenkbügels 12 sind ein Schlitz 71 und ein Schloss 61 vorgesehen.

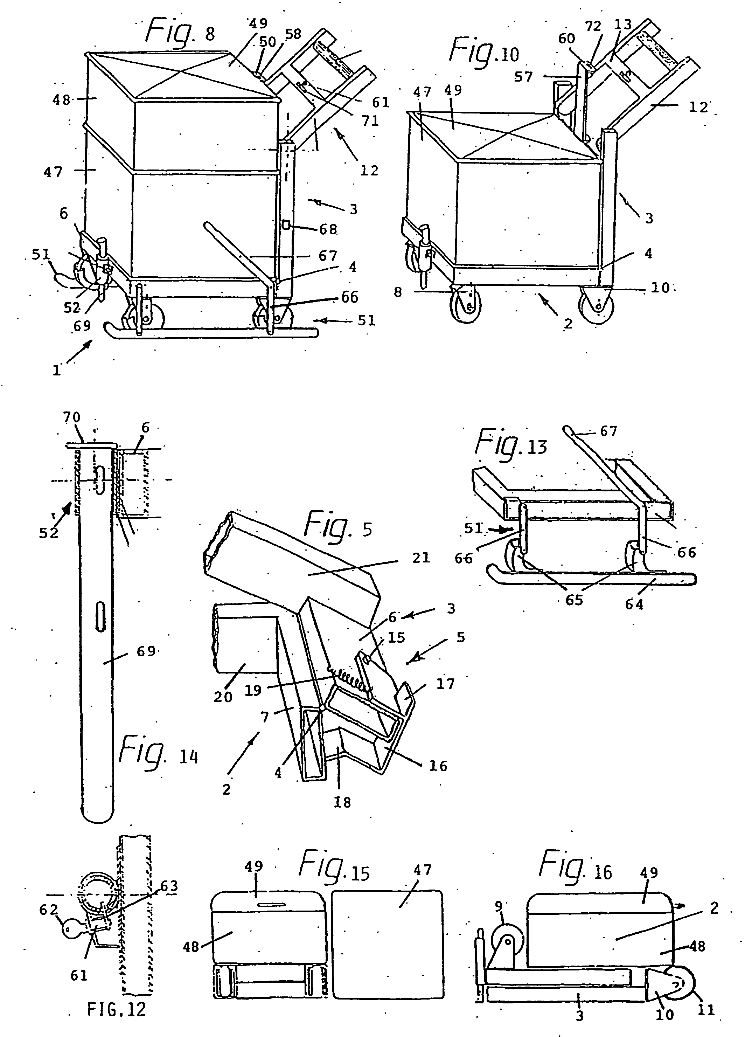

In Fig.8 ist eine Schrägansicht des Handwagens 1 mit zwei aufgesetzten, vorzugsweise unterschiedlich hohen Behältern 47, 48 und einem auf dem oben angeordneten Behälter 48 befindlichen Deckel 49 dargestellt. Der Deckel 49 weist eine Lasche 50 an der dem Lenkbügel zugewandten Seite auf. Diese Lasche 50 kann durch den Schlitz 71 in der Querstrebe 13 des Lenkbügels 12 durchgeführt werden. Zusätzlich sind Kufeneinrichtungen 51 und eine Aufbockvorrichtung 52 gezeigt.

In Fig.9 ist ein vertikaler Längsschnitt eines Handwagens mit den beiden übereinander gestapelten Behältern 47, 48 und dem Deckel 49 gemäß Fig.8 gezeigt. Die Verbindungen an der dem Bedienungsrahmen abgewandten Querseite des Handwagens 1 zwischen den nach innen geneigten Leisten 53 und den darauf aufgesetzten, in Normallage der Behälter 47, 48 hakenförmig schräg nach unten und vorne gerichteten Keilleisten 54 lassen sich dann herstellen, wenn die ineinander greifenden Teile 53, 54 an der Frontseite des Handwagens 1 zuerst zusammengefügt und danach die dem Bedienungsrahmen 3 zugewandten Seiten der Behälter 47, 48 bzw. des Deckels 49 aufgesetzt werden. Darüber hinaus ist diese Verbindung überlappend ausgeformt, so dass die Behälter spritzwasserfest sind. Ebenso sind die Verbindungen zwischen den Teilen 55 und 56 an der dem Bedienungsrahmen 3 zugewandten Seite überlappend, so dass die Behälter spritzwasserfest sind.

In Fig.10 ist der Handwagen 1 mit einem aufgesetzten Behälter 47 und einem darauf befindlichen Deckel 49 in einer Schrägansicht gezeigt. Eine Verlängerung 57 mit einer oberen Lasche 60, in der ein Schlitz 72 vorgesehen ist, und einer unteren Lasche 59 ist zwischen dem Deckel 49 und der Querstrebe 13 des Lenkbügels 12 angebracht.

In.Fig.11 ist ein vertikaler Längsschnitt des Handwagens 1 gemäß Fig.10 gezeigt. Die Verlängerung 57 ist über die in einem Schlitz 58 in der Lasche 50 des Deckels 49 aufgenommene untere Lasche 59 und über die im Schlitz 71 der Querstrebe 13 aufgenommene obere Lasche 60 mit dem Lenkbügel 12 verbunden. Der Lenkbügel 12 ist mit strichlierten Linien auch in seiner Betriebsstellung gezeigt. Die Verbindung der Lasche 50 des Deckels 49 bzw. der oberen Lasche 60 der Verlängerung 57 mit dem Schlitz 71 der Querstrebe 13 ist über ein Schloss 61 versperrbar.

In Fig.12 ist das Schloss 61 im Querschnitt dargestellt. Über einen Schlüssel 62 kann ein Schieber 63 in den Schlitz 58 der Lasche 50 des Deckels bzw. den Schlitz 72 der unteren Lasche 60 der Verlängerung 57 eingeführt werden und somit die Verbindung abgesperrt werden.

In Fig. 13 ist die Kufeneinrichtung 51 in einer Schrägansicht dargestellt. Kufen 64 sind fest an den Außenseiten von Radschuhen 65 angebracht, die jeweils über einen Arm 66 mit dem Grundrahmen 2 verbunden sind, schwenkbar. Somit können die Kufeneinrichtungen 51 vorteilhafterweise aus ihrer Betriebsposition über einen Schwenkhebel 67, der in einen am Bedienungsrahmen 3 vorgesehenen Haken 68 einhängbar ist, nach vorne und oben verschwenkt werden, um den Handwagen 1 auf seinen Laufrädern 9, 11 fortbewegen zu können.

In Fig.14 ist die Aufbockvorrichtung 52, die an der Frontseite des Handwagens 1 angebracht ist, im Detail dargestellt, wobei der Aufbockdorn 69 in seiner ausgefahrenen Position gezeigt ist, d.h. seine obere Abdeckplatte 70 sitzt auf der oberen Kante der Querstrebe 6 des Grundrahmens 2 auf. In dieser Stellung hebt der Aufbockdorn den Handwagen 1 von der Unterlage ab und macht den Handwagen 1 somit unfahrbar.

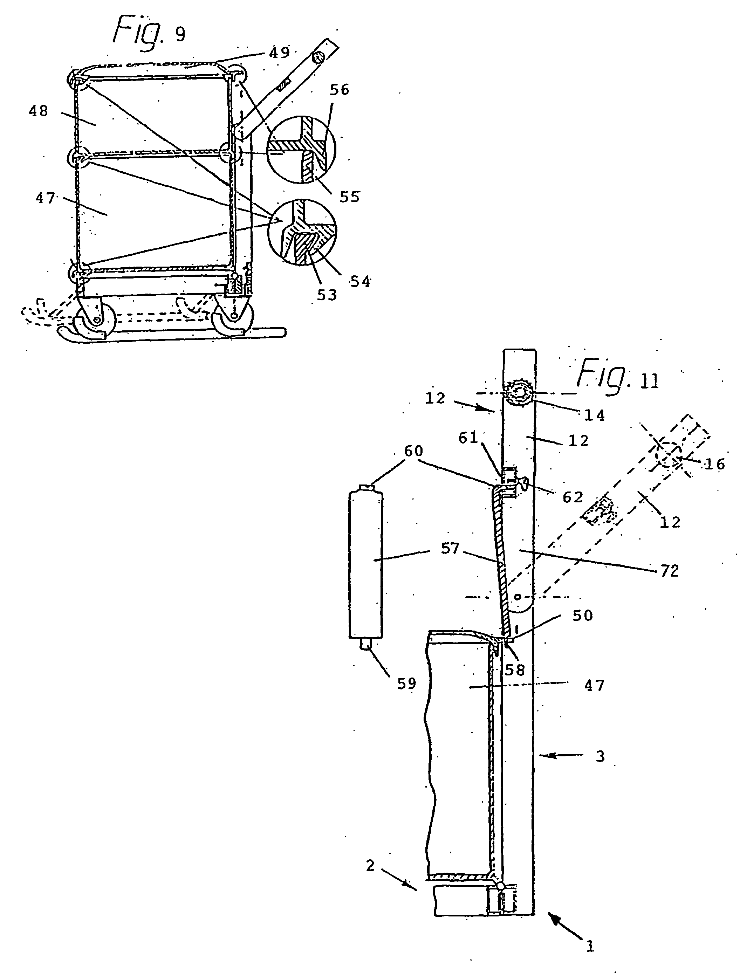

In Fig.15 ist schematisch eine Frontansicht des Handwagens 1 mit einer beispielsweise zum Transport in einem PKW geeigneten Anordnung der Behälter 47, 48 gezeigt, wobei der Behälter 48 mit dem Deckel 49 verschlossen ist. Aufgrund der auf der Unterseite des. Bedienungsrahmens 3 angebrachten Halterungen 10 für die hinteren Laufräder 11 ist eine sehr kompakte zusammengeklappte Stellung des Handwagens möglich, so dass vorteilhafterweise darauf auch noch der niedrigere Behälter 48 mit dem Deckel 49 stapelbar ist. Daneben lässt sich der Behälter 47 anordnen, der ungefähr dieselbe Höhe aufweist wie der zusammengeklappte Handwagen 1 mit dem niedrigeren Behälter 48 und dem Deckel 49 darauf.

In Fig.16 ist schematisch eine Seitenansicht der Anordnung aus Fig.15 dargestellt. Auch hier lässt sich die kompakte Anordnung des zusammengeklappten Handwagens 1 mit den Laufrädern 11 bzw. 9 und dem auf den nach oben gekehrten Grundrahmen 2 gestapelten Behälter 48 mit dem Deckel 49 erkennen.

## Patentansprüche

1. Zusammenlegbarer Handwagen, der einen an seiner Unterseite mit mindestens einem Rad versehenen Grundrahmen und einen an dessen hinterem Ende mit diesem um eine horizontale Querachse gelenkig verbundenen Bedienungsrahmen aufweist, der zwischen einer aufrechten Schiebestellung, in der auf dem Grundrahmen zumindest ein Behälter aufsetzbar ist, und einer zum Grundrahmen im Wesentlichen parallelen Klappstellung verschwenkbar ist, wobei der Bedienungsrahmen in der Schiebestellung fixierbar ist und in der Klappstellung auf dem Grundrahmen aufliegt, **dadurch gekennzeichnet, dass** am Bedienungsrahmen (3) um eine horizontale Querachse ein zumindest zwischen einer Schiebestellung und einer Parkstellung schwenkbar gelagerter Lenkbügel (12) vorgesehen ist, wobei in der Parkstellung über ein mit dem Lenkbügel (12) verbundenes Bremsgestänge (32) zumindest ein Rad (11) blockiert ist, und der mindestens eine bzw. oberste Behälter (47, 48) sowie ein am obersten Behälter angeordneter Deckel (49) mittels einer formschlüssigen Verbindung zwischen Deckel und Lenkbügel (12), gegebenfalls unter Zwischenschaltung eines Verbindungsteils (57), auf dem Handwagen (1) fest angeordnet werden kann.

2. Zusammenlegbarer Handwagen nach Anspruch 1, **dadurch gekennzeichnet, dass** der Lenkbügel (12) in der Parkstellung mit dem Bedienungsrahmen (3), einen Winkel von 150 bis 270°, vorzugsweise von 180°, einschließt.

3. Zusammenlegbarer Handwagen nach Anspruch 1 oder 2, **dadurch gekennzeichnet, dass** das mit dem Lenkbügel. (12) verbundene Bremsgestänge (32) jeweils mit einem hinteren Rad (11) zusammenwirkende Bremseinrichtung (43) aufweist.

4. Zusammenlegbarer Handwagen nach Anspruch 1 oder 3, **dadurch gekennzeichnet, dass** der Lenkbügel (12) im Bedienungsrahmen (3) frei schwenkbar gelagert ist und in einer nach unten verschwenkten Stellung des Lenkbügels (12) zumindest eine Bremseinrichtung (43) mit einem hinteren Rad (11) in Berührung steht.

5. Zusammenlegbarer Handwagen nach einem der Ansprüche 1 bis 3, **dadurch gekennzeichnet, dass** der Lenkbügel (12) zwei Längsholme (21') aufweist, zwischen welchen ein Drehgriff (14) drehbar gelagert ist, der mit Kupplungsgestängen (24) in Verbindung steht, die mit Kupplungsklauen (28) versehen sind, die mit jeweils einer von an Längsstreben (21) des Bedienungsrahmens (3) angebrachten Kupplungsscheiben (29) zusammenwirkt, die zumindest zwei Ausnehmungen (33, 34) aufweisen, in die die entsprechende-Kupplungsklaue (28) einrastbar ist, wobei eine Ausnehmung (33) der Parkstellung, und eine Ausnehmung (34) einer Schiebestellung entspricht.

6. Zusammenlegbarer Handwagen nach einem der Ansprüche 1 bis 5, **dadurch gekennzeichnet, dass** der unterste Behälter (47) auf dem Grundrahmen (2) bzw. jeder obere Behälter (48) auf dem jeweils unteren Behälter (47) über eine an der Frontseite des Grundrahmens (2) bzw. des jeweils unteren Behälters (47) angebrachte Leiste (53) sicherbar ist, die mit am oberhalb befindlichen Behälter (47, 48) angebrachten hakenförmigen und schräg nach unten und vorne gerichteten Keilleisten (54) in Eingriff bringbar sind.

7. Zusammenlegbarer Handwagen nach einem der Ansprüche 1 bis 6, **dadurch gekennzeichnet, dass** ein auf dem bzw. dem jeweils obersten Behälter (47, 49) angebrachter Deckel (49) oder eine mit diesem Deckel (49) verbundene als Verbindungsteil vorgesehene Verlängerung (57) eine Lasche (50 bzw. 60) aufweist, die durch einen Schlitz (71) im in Parkstellung befindlichen Lenkbügel (12) durchführbar ist.

8. Zusammenlegbarer Handwagen nach Anspruch 7, **dadurch gekennzeichnet, dass** die Lasche (50 bzw. 60) im Schlitz (71) des Lenkbügels (12) in an sich bekannter Weise mittels eines Schlosses (61) sicherbar ist.

9. Zusammenlegbarer Handwagen nach einem der Ansprüche 1 bis 8, **dadurch gekennzeichnet, dass** an dem Grundrahmen (2) ein Aufbockdorn (69) vorgesehen ist.

10. Zusammenlegbarer Handwagen nach einem der Ansprüche 1 bis 9, **dadurch gekennzeichnet, dass** auf der im Betriebszustand bodenzugewandten Seite des Bedienungsrahmens (3) ein oder mehrere Räder (11) angebracht sind, deren Radhalterungen (10) unterhalb des Grundrahmens vorliegen und in diesen hineinragen.

11. Zusammenlegbarer Handwagen nach einem der Anspruch 1 bis 10, **dadurch gekennzeichnet, dass** die gelenkige Verbindung (4) zwischen dem Bedienungsrahmen (3) und dem Grundrahmen (2) im Betriebszustand mittels einem beweglich gelagerten Formteil (5), vorzugsweise einem U-Profil, fixiert ist.

12. Zusammenlegbarer Handwagen nach Anspruch 11, **dadurch gekennzeichnet, dass** der Formteil (5) am Bedienungsrahmen (3), vorzugsweise der Querstrebe (6), schwenkbar gelagert ist.

13. Zusammenlegbarer Handwagen nach Anspruch 11 oder 12, **dadurch gekennzeichnet, dass** im Betriebszustand eine Querstrebe (6) des Bedienungsrahmens (3) und eine Querstrebe (7) des Grundrahmens (2) mittels dem Formteil (5) formschlüssig miteinander verbunden sind.

14. Zusammenlegbarer Handwagen nach einem der Ansprüche 11 bis 13, **dadurch gekennzeichnet, dass** der Formteil (5) über ein elastisches Element (19), vorzugsweise eine Feder, ein Gummiband oder dergl., in seiner sperrenden Position fixiert ist.

15. Zusammenlegbarer Handwagen nach einem der Ansprüche 1 bis 14, **dadurch gekennzeichnet, dass** der Lenkbügel (12) in der Klappstellung zum Grundrahmen (2) und zum Bedienungsrahmen (3) im Wesentlichen parallele Lage verschwenkbar ist und auf den Grundrahmen(2) aufliegt.

16. Zusammenlegbarer Handwagen nach Anspruch 15, **dadurch gekennzeichnet, dass** die Kupplungsscheiben (29) drei Ausnehmungen aufweisen, wobei die Ausnehmungen der Parkstellung, der Schiebestellung und der Klappstellung entsprechen.

17. Zusammenlegbarer Handwagen nach Anspruch 16, **dadurch gekennzeichnet, dass** in der Klappstellung des Lenkbügels (12) die Bremsbolzen (43) des Bremsgestänges (32) die hinteren Räder (11) blockieren.

18. Zusammenlegbarer Handwagen nach einem der Ansprüche 1 bis 17, **dadurch gekennzeichnet, dass** der Grundrahmen (2) und der Bedienungsrahmen (3) aus Leichtbaumaterialien, vorzugsweise Leichtmetall, Kunststoff oder dergl., bestehen.

## Claims

1. A collapsible hand cart comprising a base frame which is provided with at least one wheel at its lower side, and an operating frame which, by its rear end, is articulately connected about a horizontal transverse axis to the base frame and is pivotable between an upright pushing position, in which at least one container can be put on said base frame, and a collapsed position substantially parallel to said base frame, the operating frame being fixable in the pushing position and resting on the base frame in its collapsed position, **characterised in that** a steering yoke (12) is provided on the operating frame (3), which steering yoke is mounted so as to be pivotable about a horizontal transverse axis at least between a pushing position and a parking position, wherein, in said parking position, at least one wheel (11) is blocked via a braking linkage (32) which is connected to the steering yoke (12), and the at least one, or the uppermost container (47, 48), respectively, as well as a lid (49) arranged on the uppermost container, optionally with a connecting part (57) interposed, can be fixedly arranged on said hand cart (1) by means of a positive connection between the lid (49) and the steering yoke (12).

2. A collapsible hand cart according to claim 1, **characterised in that** in the parking position, the steering yoke (12) encloses an angle of from 150 to 270°, preferably of 180°, with the operating frame (3).

3. A collapsible hand cart according to claim 1 or 2, **characterised in that** the braking linkage (32) connected to the steering yoke (12) comprises a braking means (43) cooperating with one rear wheel (11) each.

4. A collapsible hand cart according to claim 1 or 3, **characterised in that** the steering yoke (12) is mounted in the operating frame (3) so as to be freely pivotable and, in the downwardly pivoted position of the steering yoke (12), at least one braking means (43) is in contact with a rear wheel (11).

5. A collapsible hand cart according to any one of claims 1 to 3, **characterised in that** the steering yoke (12) comprises two longitudinal bars (21') between which a rotating handle (14) is rotatably mounted, which rotating handle is connected to clutching gears (24) provided with coupling claws (28) each cooperating with one of coupling disks (29) mounted on longitudinal struts (21) of the operating frame (3), the coupling disks having at least two recesses (33, 34) into which the corresponding coupling claw (28) can be snapped in, one recess (33) corresponding to the parking position, and one recess (34) corresponding to a pushing position.

6. A collapsible hand cart according to any one of claims 1 to 5, **characterised in that** the lowermost container (47) on the base frame (2), or each upper container (48) on the respective lower container (47), respectively, can be secured via a ledge (53) mounted on the front side of the base frame (2), or on the respective lower container (47), respectively, which ledge is engageable in hook-shaped and obliquely downwardly and forwardly directed wedge ledges (54) mounted on the container (47, 48) that is located on top.

7. A collapsible hand cart according to any one of claims 1 to 6, **characterised in that** a lid (49) mounted on the, and/or on the respective, uppermost container (47, 48), or an extension (57) connected to this lid (49) and provided as a connecting part includes a lug (50, or 60, respectively) which can be passed through a slot (71) in the steering yoke (12) in the parking position thereof.

8. A collapsible hand cart according to claim 7, **characterised in that** the lug (50, or 60, respectively) can be secured in the slot (71) of the steering yoke (12) in a manner known per se by means of a lock (61).

9. A collapsible hand cart according to any one of claims 1 to 8, **characterised in that** a jack-up spike (69) is provided on the base frame (2).

10. A collapsible hand cart according to any one of claims 1 to 9, **characterised in that**, on the side of the operating frame (3) which in the operating state faces the ground, one or more wheels (11) are mounted whose wheel retention means (10) are provided below the base frame and project into the latter.

11. A collapsible hand cart according to any one of claims 1 to 10, **characterised in that** in the operating state, the articulate connection (4) between the operating frame (3) and the base frame (2) is fixed by means of a movably mounted shaped part (5), preferably by a U-section.

12. A collapsible hand cart according to claim 11, **characterised in that** the shaped part (5) is pivotably mounted on the operating frame (3), preferably on the transverse strut (6).

13. A collapsible hand cart according to claim 11 or 12, **characterised in that** in the operating state, one transverse strut (6) of the operating frame (3) and one transverse strut (7) of the base frame (2) are interconnected by positive engagement by means of the shaped part (5).

14. A collapsible hand cart according to any one of claims 11 to 13, **characterised in that** the shaped part (5) is fixed in its locking position via an elastic element (19), preferably via a spring, a rubber strap or the like.

15. A collapsible hand cart according to any one of claims 1 to 14, **characterised in that** the steering yoke (12) in the collapsed position is pivotable into a position substantially parallel to the base frame (2) and to the operating frame (3) and rests on the base frame (2).

16. A collapsible hand cart according to claim 15, **characterised in that** the coupling disks (29) have three recesses, said recesses corresponding to the parking position, the pushing position and the collapsed position.

17. A collapsible hand cart according to claim 16, **characterised in that** in the collapsed position of the steering yoke (12), the braking bolts (43) of the braking linkage (32) block the rear wheels (11).

18. A collapsible hand cart according to any one of claims 1 to 17, **characterised in that** the base frame (2) and the operating frame (3) are made of light weight construction materials, preferably light metal, plastics or the like.

## Revendications

1. Chariot pliant, qui comprend un châssis de base pourvu sur son côté inférieur d'au moins une roue et un châssis de manipulation relié au niveau de l'extrémité arrière dudit châssis de base à celui-ci, de façon articulée autour d'un axe transversal horizontal, lequel châssis de manipulation peut pivoter entre une position de déplacement verticale, dans laquelle au moins un contenant peut être placé sur le châssis de base, et une position rabattue qui est essentiellement parallèle au châssis de base, le châssis de manipulation pouvant être fixé dans la position de déplacement et reposant dans la position rabattue sur le châssis de base, **caractérisé en ce qu'**il est prévu sur le châssis de manipulation (3) un étrier de direction (12) logé de manière à pouvoir pivoter autour d'un axe transversal horizontal au moins entre une position de déplacement et une position d'arrêt, au moins une roue (11) étant bloquée dans la position d'arrêt par l'intermédiaire d'une tringlerie de frein (32) reliée à l'étrier de direction (12), et l'un des contenants et/ou le contenant supérieur (47, 48) ainsi qu'un couvercle (49) disposé sur le contenant supérieur pouvant être disposé fixement sur le chariot (1), au moyen d'une liaison par formes complémentaires entre le couvercle et l'étrier de direction, éventuellement en insérant une pièce de liaison (57).

2. Chariot pliant selon la revendication 1, **caractérisé en ce que** l'étrier de direction (12), dans la position d'arrêt, forme avec le châssis de manipulation (3) un angle de 150 à 270°, de préférence de 180°.

3. Chariot selon la revendication 1 ou 2, **caractérisé en ce que** la tringlerie de frein (32) reliée à l'étrier de direction (12) comprend respectivement un système de freinage (43) coopérant avec une roue arrière (11).

4. Chariot pliant selon la revendication 1 ou 3, **caractérisé en ce que** l'étrier de direction (12) est logé de manière à pouvoir pivoter librement dans le châssis de manipulation (3) et, dans une position pivotée vers le bas de l'étrier de direction (12), au moins un système de freinage (43) est en contact avec une roue arrière (11).

5. Chariot pliant selon l'une quelconque des revendications 1 à 3, **caractérisé en ce que** l'étrier de direction (12) comprend deux longerons (21'), entre lesquels est logée une poignée tournante (14), qui est relié à une tringlerie d'accouplement (24), qui est pourvue de griffes d'accouplement (28), qui coopèrent avec respectivement un parmi les disques d'accouplement (29) aménagés sur les entretoises longitudinales (21) du châssis de manipulation (3), lesquels disques comprennent au moins deux évidements (33, 34), dans lesquels peut s'enclencher la griffe d'accouplement (28) correspondante, un évidement (33) correspondant à la position d'arrêt, et un évidement (34) à une position de déplacement.

6. Chariot pliant selon l'une quelconque des revendications 1 à 5, **caractérisé en ce que** le contenant le plus inférieur (47) peut être fixé sur le châssis de base (2) et/ou chaque contenant supérieur (48) sur le contenant (47) respectivement inférieur au-dessus d'une barre (53) aménagée sur le côté frontal du châssis de base (2) et/ou du contenant respectivement inférieur (47), laquelle barre peut être amenée en prise avec des barres en forme de coin (54) en forme de crochet aménagées sur le contenant (47, 48) supérieur et orientées de façon oblique vers le bas et vers l'avant.

7. Chariot pliant selon l'une quelconque des revendications 1 à 6, **caractérisé en ce qu'**un couvercle (49) aménagé sur le ou chaque contenant supérieur (47, 49) ou un prolongement (57) relié à ce couvercle (49) et prévu comme partie de liaison comprend une éclisse (50 et/ou 60), qui peut être guidée à travers une fente (71) dans l'étrier de direction (12) situé dans la position d'arrêt.

8. Chariot pliant selon la revendication 7, **caractérisé en ce que** l'éclisse (50 et/ou 60) peut être fixée dans la fente (71) de l'étrier de direction (12) d'une façon connue au moyen d'une serrure (61).

9. Chariot pliant selon l'une quelconque des revendications 1 à 8, **caractérisé en ce qu'**un mandrin de levage par cric (69) est prévu sur le châssis de base (2).

10. Chariot pliant selon l'une quelconque des revendications 1 à 9, **caractérisé en ce que**, sur le côté tourné vers le fond du châssis de manipulation (3), dans l'état de fonctionnement, est(sont) aménagée(s) une ou plusieurs roue(s), dont les porte-roues (10) se situent au-dessous du châssis de base et font saillie dans celui-ci.

11. Chariot pliant selon l'une quelconque des revendications 1 à 10, **caractérisé en ce que** la liaison articulée (4) entre le châssis de manipulation (3) et le châssis de base (2) est fixée dans l'état de fonctionnement au moyen d'une pièce moulée (5) logée de façon mobile, de préférence d'un profilé en U.

12. Chariot pliant selon la revendication 11, **caractérisé en ce que** la pièce moulée (5) est logée de façon mobile sur le châssis de manipulation (3), de préférence sur l'entretoise transversale (6).

13. Chariot pliant selon la revendication 11 ou 12, **caractérisé en ce que**, dans l'état de fonctionnement, une entretoise transversale (6) du châssis de manipulation (3) et une entretoise transversale (7) du châssis de base (2) sont reliées l'une à l'autre par liaison par formes complémentaires au moyen de la pièce moulée (5).

14. Chariot pliant selon l'une quelconque des revendications 11 à 13, **caractérisé en ce que** la pièce moulée (5) est fixée dans sa position de verrouillage par l'intermédiaire d'un élément élastique (19), de préférence un ressort, un ruban en caoutchouc ou similaire.

15. Chariot pliant selon l'une quelconque des revendications 1 à 14, **caractérisé en ce que** l'étrier de direction (12) peut pivoter dans la position rabattue sensiblement parallèlement au châssis de base (2) et au châssis de manipulation (3) et repose sur le châssis de base (2).

16. Chariot pliant selon la revendication 15, **caractérisé en ce que** les disques d'accouplement (29) comprennent trois évidements, les évidements correspondant à la position d'arrêt, à la position de déplacement et à la position rabattue.

17. Chariot pliant selon la revendication 16, **caractérisé en ce que**, dans la position rabattue de l'étrier de direction (12), les tourillons de frein (43) de la tringlerie de frein (32) bloquent les roues arrières (11).

18. Chariot pliant selon l'une quelconque des revendications 1 à 17, **caractérisé en ce que** le châssis de base (2) et le châssis de manipulation (3) sont constitués de matériaux pour construction légère, de préférence de métal léger, de matière plastique ou similaire.
